# EUROPEAN PATENT APPLICATION

(11) **EP 4 811 328 A1**
(43) Date of publication of application: **23.09.2026**
(21) Application number: 26160717.0
(22) Date of filing: 25.02.2026
(51) Int. Cl.: G08G 5/22, G08G 5/26, G08G 5/55, G08G 5/57, G08G 5/59, G08G 5/72, G08G 5/80, H04L 67/12, H04L 67/52, H04L 67/55, H04L 67/60, H04W 4/02, H04W 4/44, H04W 4/90

(54) **SYSTEMS AND METHODS FOR LOW ALTITUDE AUTHORIZATION AND NOTIFICATION CAPABILITY DATA MANAGEMENT**

(30) Priority: 21.03.2025 IN 202511025911; 05.05.2025 US 202519198276
(71) Applicant: Honeywell International Inc., Charlotte, NC 28202 (US)
(72) Inventor: BALADHANDAPANI, Gobinathan, Charlotte, 28202 (US); SUBRAMANIYAN, Muthusankar, Charlotte, 28202 (US); KANAGARAJAN, Sivakumar, Charlotte, 28202 (US)
(74) Representative: Ingrassia, Fisher & Lorenz UK Ltd.

(57) **Abstract**

Systems and methods are provided for low altitude authorization and notification capability (LAANC) data management. LAANC data associated with a first plurality of unmanned aerial vehicles (UAV) is published in a LAANC data database. The LAANC data for each of the first plurality of UAVs includes a UAV identifier and a UAV flight path. A query for LAANC data associated with an aircraft flight path of an aircraft is received from a computing system onboard the aircraft. At least one of the first plurality of UAVs having at least a portion of an associated UAV flight path within a pre-defined distance of the aircraft flight path is identified. The UAV identifier and the UAV flight path associated with each of the at least one of the first plurality of UAVs is transmitted to the computing system onboard the aircraft for display on a cockpit display.

## Description

### CROSS REFERENCE TO RELATED APPLICATION

This application claims priority to India Provisional Patent Application No. 202511025911, filed March 25, 2025, the entire content of which is incorporated by reference herein.

### TECHNICAL FIELD

The present invention generally relates to aircraft operations and more particularly relates to systems and methods for low altitude authorization and notification capability (LAANC) data management.

### BACKGROUND

Unmanned aerial vehicles (UAV) are often used within controlled airspaces at airports for various purposes, such as for example, runway inspections, airport light inspections, and bird inspections. Low Altitude Authorization and Notification Capability (LAANC) supports integration of UAVs into controlled airspaces at airports by providing near real-time processing of authorizations of UAV flight paths at low altitude high traffic regions within the controlled airspaces. The authorized UAV flight paths are typically provided to air traffic control (ATC).

Aircraft flying into a controlled airspace of an airport typically receive UAV flight paths of UAVs upon establishing contact with ATC. The traffic collision avoidance system (TCAS) is not designed to integrate the received UAV flight paths. In addition, UAV flight paths are typically not displayed on cockpit displays onboard the aircraft. Monitoring potential deviations of a UAV from an authorized UAV flight path may be time consuming for flight crew members during the high workload periods associated with flying an approach flight path.

Hence, there is a need for systems and methods for LAANC data management to provide increased situational awareness associated with UAV flight paths to flight crew of an aircraft during an approach flight path.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In various embodiments, a method of managing low altitude authorization and notification capability (LAANC) data includes: publishing LAANC data associated with a first plurality of unmanned aerial vehicles (UAV) in a LAANC data database, the LAANC data for each of the first plurality of UAVs including a UAV identifier and a UAV flight path; receiving a query for LAANC data associated with an aircraft flight path of an aircraft from a computing system onboard the aircraft; identifying at least one of the first plurality of UAVs having at least a portion of an associated UAV flight path within a pre-defined distance of the aircraft flight path; and transmitting the UAV identifier and the UAV flight path associated with each of the at least one of the first plurality of UAVs to the computing system onboard the aircraft for display on a cockpit display.

In various embodiments, a low altitude authorization and notification capability (LAANC) data management system includes at least one processor and at least one memory communicatively coupled to the at least one processor, the at least one memory including instructions that, upon execution by the at least one processor, cause the at least one processor to: publish LAANC data associated with a first plurality of unmanned aerial vehicles (UAV) in a LAANC data database, the LAANC data for each of the first plurality of UAVs including a UAV identifier and a UAV flight path; receive a query for LAANC data associated with an aircraft flight path of an aircraft from a computing system onboard the aircraft; identify at least one of the first plurality of UAVs having at least a portion of an associated UAV flight path within a pre-defined distance of the aircraft flight path; and transmit the UAV identifier and the UAV flight path associated with each of the at least one of the first plurality of UAVs to the computing system onboard the aircraft for display on a cockpit display.

In various embodiments, at least one non-transitory machine-readable storage medium that stores instructions executable by at least one processor, the instructions configurable to cause the at least one processor to perform operations including: publishing LAANC data associated with a first plurality of unmanned aerial vehicles (UAV) in a LAANC data database, the LAANC data for each of the first plurality of UAVs comprising a UAV identifier and a UAV flight path; receiving a query for LAANC data associated with an aircraft flight path of an aircraft from a computing system onboard the aircraft; identifying at least one of the first plurality of UAVs having at least a portion of an associated UAV flight path within a pre-defined distance of the aircraft flight path; and transmitting the UAV identifier and the UAV flight path associated with each of the at least one of the first plurality of UAVs to the computing system onboard the aircraft for display on a cockpit display.

Furthermore, other desirable features and characteristics of systems and methods for LAANC data management become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a block diagram representation of a system configured to receive low altitude authorization and notification capability (LAANC) data from a LAANC data management system in accordance with at least one embodiment;
FIG. 2 is a LAANC data management system in accordance with at least one embodiment;
FIG. 3 is a flowchart representation of a method of managing LAANC data in accordance with at least one embodiment;
FIG. 4 is an exemplary navigation display including a UAV traffic notification in accordance with an embodiment;
FIG. 5 is an exemplary navigation display including a notification that an aircraft flight path of an aircraft falls within an active flying zone of a UAV in accordance with at least one embodiment; and
FIG. 6 is an exemplary navigation display including a notification that a UAV flight path of a UAV has deviated from a previously transmitted UAV flight path in accordance with at least one embodiment.

### DETAILED DESCRIPTION

The following detailed description is merely exemplary in nature. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

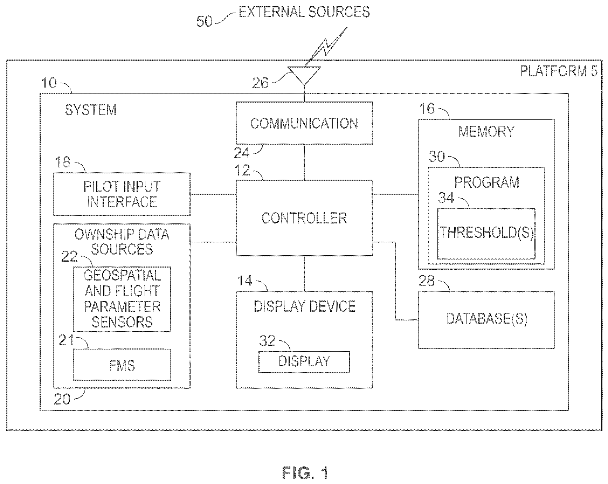

Referring to FIG. 1, a block diagram representation of a system 10 configured to receive low altitude authorization and notification capability (LAANC) data from a LAANC data management system in accordance with at least one embodiment. The system 10 may be utilized onboard a mobile platform 5, as described herein. In various embodiments, the mobile platform is an aircraft, which carries or is equipped with the system 10. As schematically depicted in FIG. 1, the system 10 includes the following components or subsystems, each of which may assume the form of a single device or multiple interconnected devices: a controller circuit 12 operationally coupled to: at least one display device 14; computer-readable storage media or memory 16; an optional input interface 18, and ownship data sources 20 including, for example, a flight management system (FMS) 21 and an array of flight system state and geospatial sensors 22.

In various embodiments, the system 10 may be separate from or integrated within: the flight management system (FMS) 21 and/or a flight control system (FCS). Although schematically illustrated in FIG. 1 as a single unit, the individual elements and components of the system 10 can be implemented in a distributed manner utilizing any practical number of physically distinct and operatively interconnected pieces of hardware or equipment. When the system 10 is utilized as described herein, the various components of the system 10 will typically all be located onboard the mobile platform 5.

The term "controller circuit" (and its simplification, "controller"), broadly encompasses those components utilized to carry-out or otherwise support the processing functionalities of the system 10. Accordingly, the controller circuit 12 can encompass or may be associated with a programmable logic array, application specific integrated circuit or other similar firmware, as well as any number of individual processors, flight control computers, navigational equipment pieces, computer-readable memories (including or in addition to the memory 16), power supplies, storage devices, interface cards, and other standardized components. In various embodiments, the controller circuit 12 embodies one or more processors operationally coupled to data storage having stored therein at least one firmware or software program (generally, computer-readable instructions that embody an algorithm) for carrying-out the various process tasks, calculations, and control/display functions described herein.

The controller circuit 12 may exchange data, including real-time wireless data, with one or more external sources 50 to support operation of the system 10 in embodiments. In at least one embodiment, one of the external sources 50 is the LAANC data management system. In this case, bidirectional wireless data exchange may occur over a communications network, such as a public or private network implemented in accordance with Transmission Control Protocol/Internet Protocol architectures or other conventional protocol standards. Encryption and mutual authentication techniques may be applied, as appropriate, to ensure data security.

The memory 16 is a data storage that can encompass any number and type of storage media suitable for storing computer-readable code or instructions, such as the aforementioned software program 30, as well as other data generally supporting the operation of the system 10. The memory 16 may also store one or more threshold 34 values, for use by an algorithm embodied in software program 30. One or more database(s) 28 are another form of storage media; they may be integrated with memory 16 or separate from it.

In various embodiments, aircraft-specific parameters and information for an aircraft may be stored in the memory 16 or in a database 28 and referenced by the program 30. Non-limiting examples of aircraft-specific information includes an aircraft weight and dimensions, performance capabilities, configuration options, and the like.

Flight parameter sensors and geospatial sensors 22 supply various types of data or measurements to the controller circuit 12 during an aircraft flight. In various embodiments, the geospatial sensors 22 supply, without limitation, one or more of: inertial reference system measurements providing a location, Flight Path Angle (FPA) measurements, airspeed data, groundspeed data (including groundspeed direction), vertical speed data, vertical acceleration data, altitude data, attitude data including pitch data and roll measurements, yaw data, heading information, sensed atmospheric conditions data (including wind speed and direction data), flight path data, flight track data, radar altitude data, and geometric altitude data.

With continued reference to FIG. 1, the display device 14 can include any number and type of image generating devices on which one or more avionic displays 32 may be produced. When the system 10 is utilized for a manned aircraft, the display device 14 may be affixed to the static structure of the Aircraft cockpit as, for example, a Head Down Display (HDD) or Head Up Display (HUD) unit. In various embodiments, the display device 14 may assume the form of a movable display device (e.g., a pilot-worn display device) or a portable display device, such as an Electronic Flight Bag (EFB), a laptop, or a tablet computer carried into the aircraft cockpit by a pilot. In at least one embodiment, the movable display device is an onboard computing system. The onboard computing system is configured to be communicatively coupled to the display device 14. In at least one embodiment, the onboard computing system is an API device including a LAANC application.

At least one avionic display 32 is generated on the display device 14 during operation of the system 10; the term "avionic display" is synonymous with the term "aircraft-related display" and "cockpit display" and encompasses displays generated in textual, graphical, cartographical, and other formats. The system 10 can generate various types of lateral and vertical avionic displays 32 on which map views and symbology, text annunciations, and other graphics pertaining to flight planning are presented for a pilot to view. The display device 14 is configured to continuously render at least a lateral display showing the aircraft at its current location within the map data. The avionic display 32 generated and controlled by the system 10 can include graphical user interface (GUI) objects and alphanumerical input displays of the type commonly presented on the screens of multifunction control display units (MCDUs), as well as Control Display Units (CDUs) generally. Specifically, embodiments of the avionic displays 32 include one or more two-dimensional (2D) avionic displays, such as a horizontal (i.e., lateral) navigation display or vertical navigation display (i.e., vertical situation display VSD); and/or on one or more three dimensional (3D) avionic displays, such as a Primary Flight Display (PFD) or an exocentric 3D avionic display.

In various embodiments, a human-machine interface is implemented as an integration of a pilot input interface 18 and a display device 14. In various embodiments, the display device 14 is a touch screen display. In various embodiments, the human-machine interface also includes a separate pilot input interface 18 (such as a keyboard, cursor control device, voice input device, or the like), generally operationally coupled to the display device 14. Via various display and graphics systems processes, the controller circuit 12 may command and control a touch screen display device 14 to generate a variety of graphical user interface (GUI) objects or elements described herein, including, for example, buttons, sliders, and the like, which are used to prompt a user to interact with the human-machine interface to provide user input; and for the controller circuit 12 to activate respective functions and provide user feedback, responsive to received user input at the GUI element.

In various embodiments, the system 10 may also include a dedicated communications circuit 24 configured to provide a real-time bidirectional wired and/or wireless data exchange for the controller 12 to communicate with the external sources 50 (including, each of: traffic, air traffic control (ATC), satellite weather sources, ground stations, LAANC data management system and the like). In various embodiments, the communications circuit 24 may include a public or private network implemented in accordance with Transmission Control Protocol/Internet Protocol architectures and/or other conventional protocol standards. Encryption and mutual authentication techniques may be applied, as appropriate, to ensure data security. In some embodiments, the communications circuit 24 is integrated within the controller circuit 12, and in other embodiments, the communications circuit 24 is external to the controller circuit 12. When the external source 50 is "traffic," the communications circuit 24 may incorporate software and/or hardware for communication protocols as needed for traffic collision avoidance (TCAS), automatic dependent surveillance-broadcast (ADS-B), and enhanced vision systems (EVS).

In certain embodiments of the system 10, the controller circuit 12 and the other components of the system 10 may be integrated within or cooperate with any number and type of systems commonly deployed onboard an aircraft including, for example, an FMS 21.

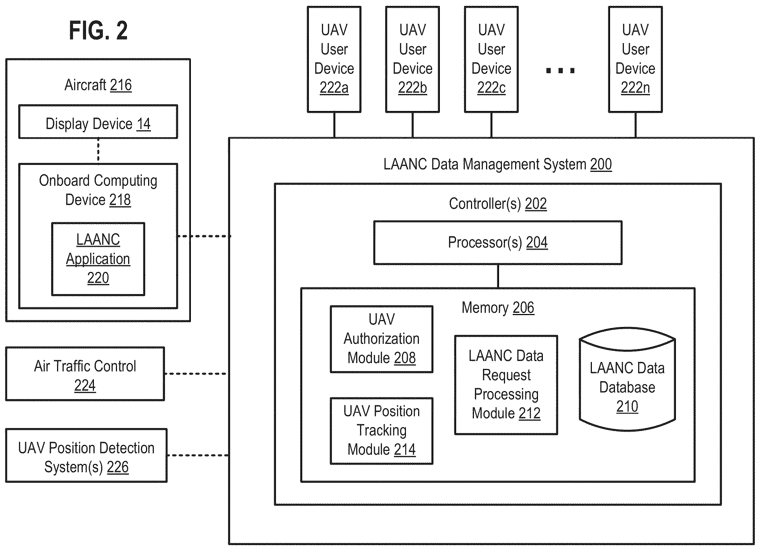

Referring to FIG. 2, a LAANC data management system 200 in accordance with at least one embodiment is shown. The LAANC data management system 200 includes at least one controller 202. The controller(s) 202 includes at least one processor 204 and at least one memory 206. The at least one memory 206 includes a unmanned aerial vehicle (UAV) authorization module 208, a published LAANC data database 210, a LAANC data request processing module 212, and a UAV position tracking module 214. In various embodiments, the LAANC data management system 200 may include additional components that facilitate operation of the LAANC data management system 200.

The LAANC data management system 200 is configured to be communicatively coupled with at least one aircraft 216. In various embodiments, the configuration of the aircraft 216 is similar to the configuration of the platform 5 described with reference to FIG. 1. The aircraft 216 includes an onboard computing device 218. In at least one embodiment, the onboard computing device 218 is an Electronic Flight Bag (EFB). In at least one embodiment, the onboard computing device 218 is a tablet computer carried into the aircraft cockpit by a pilot. In at least one embodiment, the onboard computing device 218 is an API device. The onboard computing device 218 includes a LAANC application 220. The onboard computing device 218 exposes a LAANC Application Programming Interface (API) that enables communication between the LAANC application 220 and the LAANC data management system 200 through a set of defined protocols and rules via a standardized interface. The onboard computing device 218 is configured to be communicatively coupled to a display device 14 that is configured to display at least one cockpit display.

The LAANC data management system 200 is configured to be communicatively coupled to a plurality of UAV user devices 222a, 222b, 222c...222n. Each of the plurality of UAV user devices 222a, 222b, 222c...222n is associated with a UAV. The LAANC data management system 200 is configured to receive a request for authorization of a UAV flight path of a UAV within a controlled airspace of an airport from each of the plurality of UAV user devices 222a, 222b, 222c...222n. Each request for authorization of a UAV flight path of a UAV received from an associated UAV user device 222a, 222b, 222c...222n includes a UAV identifier, a UAV flight path of the UAV, and a UAV flight time range.

The LAANC data management system 200 is configured to be communicatively coupled to air traffic control (ATC) 224. When the LAANC data management system 200 receives a request for authorization of a UAV flight path from a UAV user device 222a, 222b, 222c...222n, the UAV authorization module 208 transmits the request for authorization of the UAV flight path to ATC 224. ATC 224 provides one of an approval or a denial of the authorization of the UAV flight path. ATC 224 transmits the one of the approval or the denial of authorization of the UAV flight path to the UAV authorization module 208.

When the UAV authorization module 208 receives a denial of authorization of a UAV flight path from ATC 224, the UAV authorization module 208 is configured to transmit the denial of authorization to the UAV user device 222a, 222b, 222c...222n, that transmitted the request for authorization of that UAV flight path. When the UAV authorization module 208 receives an approval of authorization of a UAV flight path from ATC 224, the UAV authorization module 208 is configured to transmit the approval of authorization to the UAV user device 222a, 222b, 222c...222n, that transmitted the request for authorization of that UAV flight path. The UAV authorization module 208 is configured to publish LAANC data associated with the approved UAV flight path in the LAANC data database 210. The LAANC data includes the UAV identifier of the UAV, the approved UAV flight path of the UAV, and the UAV flight time range of the UAV.

The aircraft 216 has an aircraft flight path. The LAANC data management system 200 is configured to receive a query for LAANC data associated with the aircraft flight path from the onboard computing device 218 of the aircraft 216. The query for LAANC data includes the aircraft flight path, an aircraft identifier, and an aircraft position of the aircraft 216.

The LAANC data request processing module 212 is configured to receive the query for the LAANC data. In at least one embodiment, the LAANC data request processing module 212 is configured to identify the UAV flight paths in the published LAANC data stored at the LAANC data database 210 that have at least a portion of the UAV flight path within a pre-defined distance of the aircraft flight path. In at least one embodiment, the LAANC data request processing module 212 is configured to estimate an aircraft flight time range that the aircraft 216 is expected to be within the controlled airspace of the airport based on the aircraft position of the aircraft 216. The LAANC data request processing module 212 is configured to identify the UAV flight paths in the published LAANC data stored at the LAANC data database 210 that have at least a portion of the UAV flight path within a pre-defined distance of the aircraft flight path having a UAV flight time range that overlaps the aircraft flight time range.

The LAANC data request processing module 212 retrieves the identified UAV flight paths and the associated UAV identifiers from the LAANC data database 210 and transmits the retrieved UAV flight paths and the associated UAV identifiers to the onboard computing device 218 for display on a cockpit display on the display device 14 of the aircraft 216. In at least one embodiment, the LAANC data request processing module 212 transmits notification(s) associated with the UAV flight paths and the UAV identifiers to the onboard computing device 218 for display on a cockpit display on the display device 14 of the aircraft 216.

In at least one embodiment, the LAANC data management system 200 is configured to be communicatively coupled to a UAV position detection system 226. The UAV position tracking module 214 is configured to receive updated UAV positions of the UAVs associated with the published UAV flight paths stored in the LAANC data database 210. In at least one embodiment, the UAV position detection system 226 is a Robin Radar^{®} system. The UAV position tracking module 214 is configured to update the published UAV flight paths of the UAVs stored in the LAANC data database 210 in accordance with the updated UAV positions of the UAVs received from the UAV position detection system 226.

In at least one embodiment, the UAV position tracking module 214 is configured to transmit updated UAV flight paths that fall with the pre-defined distance of the aircraft flight path to the onboard computing device 218 for display on the cockpit display on the display device 14. In at least one embodiment, the UAV position tracking module 214 is configured to transmit notification(s) associated with the updated UAV flight paths that fall within the pre-defined distance of the aircraft flight path to the onboard computing device 218 for display on the cockpit display on the display device 14.

In at least one embodiment, ATC 224 is configured to track UAV positions of the UAVs. ATC 224 transmits updated UAV positions to the LAANC data management system 200. The UAV position tracking module 214 at the LAANC data management system 200 is configured to update the published UAV flight paths of the UAVs stored in the LAANC data database 210 in accordance with the updated UAV positions of the UAVs received from ATC 224.

In at least one embodiment, the aircraft 216 includes a weather radar system. The LAANC application 220 running on the onboard computing device 218 of the aircraft 216 is configured to receive radar data from the weather radar system and derive updated UAV positions of the UAVs associated with the UAV flight paths within the pre-defined distance of the aircraft 216 based on the received radar data. The LAANC application 220 is configured to update the UAV flight paths of the UAVs within the pre-defined distance of the aircraft 216 in accordance with the updated UAV positions. The LAANC application 220 is configured to generate the updated UAV flight paths and notification(s) associated with the updated UAV flight paths that fall within the pre-defined distance of the aircraft flight path for display on the cockpit display on the display device 14.

In at least one embodiment, the UAVs includes UAV transponders. The aircraft 216 is configured to receive updated UAV positions of the UAVs via UAV signals transmitted via the UAV transponders of the UAVs within the pre-defined distance of the aircraft 216. The LAANC application 220 running on the onboard computing device 218 of the aircraft 216 is configured to receive the updated UAV positions. The LAANC application 220 is configured to update the UAV flight paths of the UAVs within the pre-defined distance of the aircraft 216 in accordance with the updated UAV positions. The LAANC application 220 is configured to generate the updated UAV flight paths and notification(s) associated with the updated UAV flight paths that fall within the pre-defined distance of the aircraft flight path for display on the cockpit display on the display device 14.

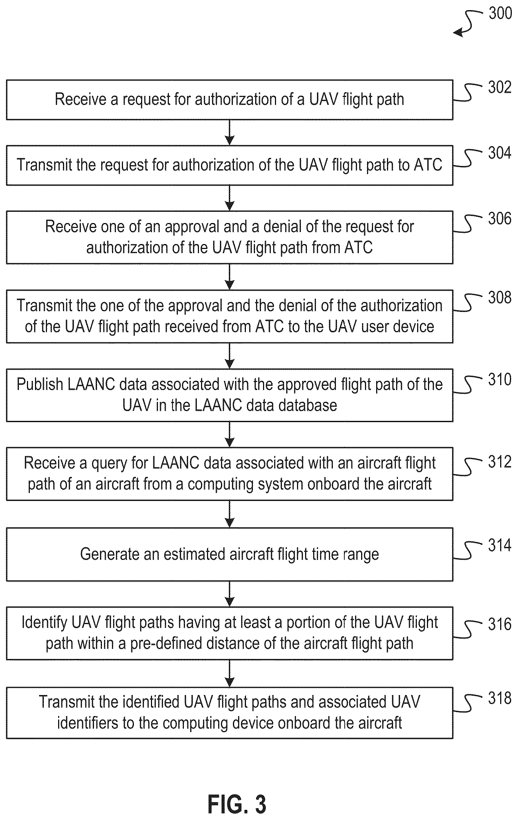

Referring to FIG. 3, a flowchart representation of a method of managing LAANC data in accordance with at least one embodiment is shown. The method 300 will be described with reference to an exemplary implementation of a LAANC data management system 200. As can be appreciated in light of the disclosure, the order of operation within the method 300 is not limited to the sequential execution as illustrated in FIG. 3 but may be performed in one or more varying orders as applicable and in accordance with the present disclosure.

At 302, the LAANC data management system 200 receives a request for authorization of a UAV flight path of a UAV from a UAV user device 222a, 222b, 222c...222n associated with the UAV. In at least one embodiment, a UAV authorization module 208 at the LAANC data management system 200 receives the request for authorization of the UAV flight path of the UAV from the UAV user device 222a, 222b, 222c...222n associated with the UAV. The request for authorization includes the UAV flight path, a UAV identifier, and a UAV flight time range associated with the UAV flight path. The UAV flight time range includes a starting UAV flight time and an ending UAV flight time. The UAV flight path falls within a controlled airspace of an airport. The LAANC data management system 200 is configured to simultaneously process multiple requests for authorization of UAV flight paths at the same time.

At 304, the LAANC data management system 200 transmits the request for authorization of the UAV flight path to ATC 224. In at least one embodiment, the UAV authorization module 208 transmits the request for authorization of the UAV flight path to ATC 224. At 306, the LAANC data management system 200 receives one of an approval and a denial of the authorization of the UAV flight path from ATC 224. In at least one embodiment, the UAV authorization module 208 receives the one of the approval and the denial of the authorization of the UAV flight path from ATC 224.

At 308, the LAANC data management system 200 transmits the one of the approval and the denial of the authorization of the UAV flight path received from ATC 224 to the UAV user device 222a, 222b, 222c...222n, that transmitted the request for authorization of that UAV flight path to the LAANC data management system 200. In at least one embodiment, the UAV authorization module 208 transmits the one of the approval and the denial of the authorization of the UAV flight path received from ATC 224 to the UAV user device 222a, 222b, 222c...222n, that transmitted the request for authorization of that UAV flight path to the LAANC data management system 200.

When the UAV authorization module 208 receives a denial of the authorization of the UAV flight path from ATC 224, the UAV authorization module 208 transmits the denial of the authorization to the UAV user device 222a, 222b, 222c...222n, that transmitted the request for authorization of that UAV flight path. When the UAV authorization module 208 receives an approval of the authorization of the UAV flight path from ATC 224, the UAV authorization module 208 transmits the approval of authorization of the UAV flight path to the UAV user device 222a, 222b, 222c...222n, that transmitted the request for authorization of that UAV flight path.

At 310, the LAANC data management system 200 publishes LAANC data associated with the approved UAV flight path of the UAV in the LAANC data database 210. In at least one embodiment, the UAV authorization module 208 publishes LAANC data associated with the approved UAV flight path of the UAV in the LAANC data database 210. The LAANC data includes the UAV identifier of the UAV, the approved UAV flight path of the UAV, and the UAV time range of the approved UAV flight path.

At 312, the LAANC data management system 200 receives a query for LAANC data associated with an aircraft flight path of an aircraft 216 from an onboard computing device 218 of the aircraft 216. In at least one embodiment, the LAANC data request processing module 212 receives the query for LAANC data associated with the aircraft flight path of the aircraft 216 received from the onboard computing device 218 of the aircraft 216. In at least one embodiment, the onboard computing device 218 is an API device. The API device includes a LAANC application 220. The query for LAANC data includes an aircraft identifier of the aircraft, the aircraft flight path, and an aircraft position of the aircraft 216. The aircraft flight path is an approach flight path that falls within the controlled airspace of the airport.

At 314, the LAANC data management system 200 generates an estimated aircraft flight time range based on the aircraft position. In at least one embodiment, the LAANC data request processing module 212 generates the estimated aircraft flight time range based on the aircraft position. The estimated aircraft flight time range includes an estimated starting aircraft flight time when the aircraft 216 enters the controlled airspace at the airport and an estimated ending aircraft flight time when the aircraft 216 completes the approach flight path at the airport.

At 316, the LAANC data management system 200 identifies the UAV flight paths from the published LAANC data stored at the LAANC data database 210 that have at least a portion of the UAV flight path within a pre-defined distance of the aircraft flight path. In at least one embodiment, the LAANC data request processing module 212 identifies the UAV flight paths from the published LAANC data stored at the LAANC data database 210 that have at least a portion of the UAV flight path within a pre-defined distance of the aircraft flight path. In at least one embodiment, the LAANC data request processing module 212 identifies the UAV flight paths from the published LAANC data stored at the LAANC data database 210 that have at least a portion of the UAV flight path within a pre-defined distance of the aircraft flight path and a UAV flight time range that overlaps the estimated aircraft flight time range.

At 318, the LAANC data management system 200 transmits the identified UAV flight paths and the UAV identifiers associated with each of the identified UAV flight paths, to the onboard computing device 218 of the aircraft 216. In at least one embodiment, the LAANC data request processing module 212 transmits the identified UAV flight paths and the UAV identifiers associated with each of the identified UAV flight paths to the onboard computing device 218 of the aircraft 216.

The onboard computing device 218 is configured to be communicatively coupled to a display device 14 of the aircraft 216 that is configured to display a cockpit display. In at least one embodiment, the cockpit display is a navigation display. The onboard computing device 218 includes the LAANC application 220. The LAANC application 220 receives the UAV flight paths and the UAV identifiers associated with each of the UAV flight paths from the LAANC data management system 200. The LAANC application 220 transmits the received UAV flight paths and associated UAV identifiers to the display device 14. The display device 14 overlays UAV positions of the UAVs in accordance with the received UAV flight paths on the navigation display.

In at least one embodiment, the LAANC data management system 200 generates an active flying zone associated with each of the UAV flight paths that the LAANC data management system 200 has identified for transmission to the onboard computing device 218 of the aircraft 216. The LAANC data management system 200 transmits the active flying zone for each of the UAV fight paths, the UAV flight paths, and the UAV identifiers to the onboard computing device 218 of the aircraft 216.

The LAANC application 220 receives the active flying zones for each of the UAV flight paths, the UAV flight paths, and the UAV identifiers associated with each of the UAV flight paths from the LAANC data management system 200. The LAANC application 220 transmits the received active flying zones for each of the UAV flight paths, the UAV flight paths, and the UAV identifiers to the display device 14. The display device 14 overlays the received UAV flight paths, associated active flying zones, and associated UAV identifiers on the navigation display.

In at least one embodiment, the LAANC data management system 200 transmits a notification associated with one or more of the UAV flight paths that the LAANC data management system 200 has identified for transmission to the onboard computing device 218 of the aircraft 216.

In at least one embodiment, the LAANC data management system 200 is configured to determine whether the aircraft flight path falls within a pre-defined distance of an active flying zone of one or more of the UAV flight paths that the LAANC data management system 200 has identified for transmission to the onboard computing device 218. If the LAANC data management system 200 determines that the aircraft flight path falls within a pre-defined distance of an active flying zone of one or more of the UAV flight paths that the LAANC data management system 200 has identified for transmission to the onboard computing device 218, the LAANC data management system 200 is configured to transmit a notification to the onboard computing device 218 that the aircraft flight path falls within a pre-defined distance of an active flying zone of one or more of the UAV flight paths for display on the cockpit display on the display device 14 of the aircraft 216. The notification includes the UAV identifiers associated with the one or more of the UAV flight paths.

In at least one embodiment, the LAANC data management system 200 is configured to determine whether the aircraft flight path falls within an active flying zone of one or more of the UAV flight paths that the LAANC data management system 200 has identified for transmission to the onboard computing device 218. If the LAANC data management system 200 determines that the aircraft flight path falls within an active flying zone of one or more of the UAV flight paths that the LAANC data management system 200 has identified for transmission to the onboard computing device 218, the LAANC data management system 200 is configured to transmit a notification to the onboard computing device 218 that the aircraft flight path falls within an active flying zone of one or more of the UAV flight paths for display on the cockpit display on the display device 14 of the aircraft 216. The notification includes the UAV identifiers associated with the one or more of the UAV flight paths.

In at least one embodiment, the LAANC data management system 200 is configured to be communicatively coupled to a UAV position detection system 226 and is configured to receive updated UAV positions of the UAVs associated with the published UAV flight paths stored in the LAANC data database 210 from the UAV position detection system 226. The LAANC data management system 200 is configured to update the published UAV flight paths of the UAVs stored in the LAANC data database 210 in accordance with the updated UAV positions of the UAVs received from the UAV position detection system 226.

In at least one embodiment, the LAANC data management system 200 is configured to determine whether one or more of the UAV flight paths that the LAANC data management system 200 previously transmitted to the onboard computing device 218 of the aircraft 216 has an updated UAV flight path that has deviated from the previously transmitted UAV flight path. If the LAANC data management system 200 determines that one or more of the UAV flight paths that the LAANC data management system 200 previously transmitted to the onboard computing device 218 has an updated UAV flight path that has deviated from the previously transmitted UAV flight path, the LAANC data management system 200 is configured to transmit a notification to the onboard computing device 218 identifying the one or more UAV flight paths that have deviated from the previously transmitted UAV flight path for display on the cockpit display on the display device 14 of the aircraft 216. The LAANC data management system 200 is configured to transmit the updated UAV flight paths to the onboard computing device 218 for display on the cockpit display on the display device 14 of the aircraft 216. The notification includes the UAV identifiers associated with the updated UAV flight paths.

In at least one embodiment, the LAANC data management system 200 is configured to determine whether the aircraft flight path intersects one or more of the UAV flight paths that the LAANC data management system 200 has identified for transmission to the onboard computing device 218. If the LAANC data management system 200 determines that the aircraft flight path intersects one or more of the UAV flight paths, the LAANC data management system 200 is configured to transmit a notification to the onboard computing device 218 identifying the one or more UAV flight paths that intersect the aircraft flight path to the onboard computing device 218 for display on the cockpit display on the display device 14 of the aircraft 216. In at least one embodiment the notification includes a warning of a potential event between the aircraft 216 and a UAV with a UAV flight path that intersects the aircraft flight path. The notification includes the UAV identifiers associated with the one or more of the UAV flight paths.

In at least one embodiment, the LAANC application 220 is configured to generate a prompt if there is an imminent event between the aircraft 216 and a UAV with a UAV flight path that intersects the aircraft flight path for display on the cockpit display. Responsive to activation of the prompt by a crew member, the FMS 21 automatically implements appropriate aircraft maneuvers to avoid the event between the aircraft 216 and the UAV with the UAV flight path that intersects the aircraft flight path.

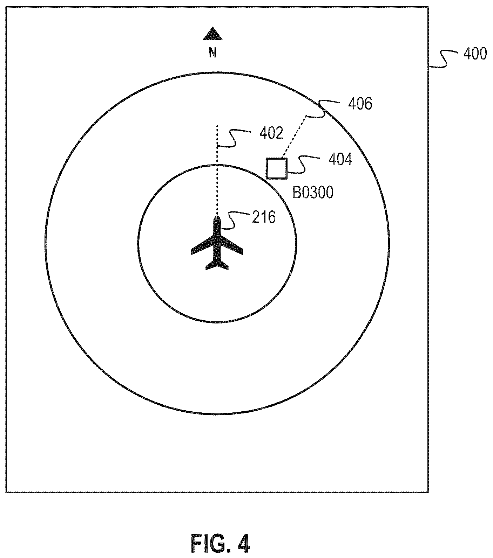

Referring to FIG. 4, an exemplary navigation display 400 including a UAV traffic notification in accordance with an embodiment is shown. The LAANC data management system 200 received a query for LAANC data associated with an aircraft flight path 402 of an aircraft 216 from an onboard computing device 218 of the aircraft 216. The LAANC data management system 200 identified a UAV 404 having a UAV flight path 406 within a pre-defined distance of the aircraft flight path 402 and a UAV flight time range that overlaps the aircraft flight time range. The LAANC data management system 200 transmitted a notification including the UAV flight path 406 and a UAV identifier B0300 associated with the UAV flight path 406 to the onboard computing device 218. The onboard computing device 218 transmitted the UAV identifier B0300 and the UAV flight path 406 to a display device 14 of the aircraft 216. The display device 14 used a symbol to display the UAV 404 and the UAV flight path as an overlay on the navigation display 400. The display device 14 displayed the UAV identifier B0300 in association with the UAV 404.

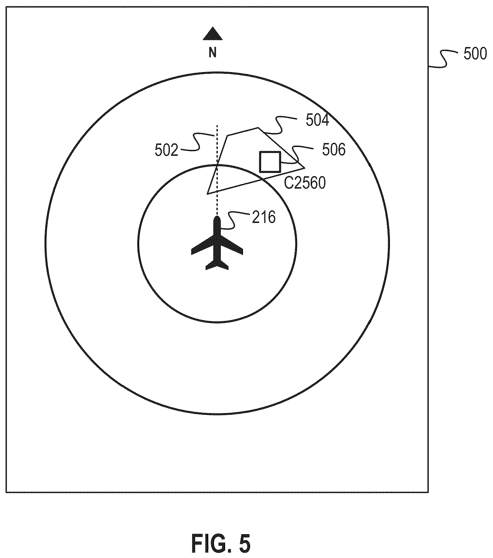

Referring to FIG. 5, an exemplary navigation display 500 including a notification that an aircraft flight path 502 of an aircraft 216 falls within an active flying zone 504 of a UAV 506 in accordance with at least one embodiment is shown. The LAANC data management system 200 received a query for LAANC data associated with the aircraft flight path 502 from an onboard computing device 218 of the aircraft 216. The LAANC data management system 200 determined that the aircraft flight path 502 fell within the active flying zone 504 of the UAV 506. The LAANC data management system 200 transmitted the notification including a UAV flight path of the UAV 506, a UAV identifier C2560 of the UAV 506, and the active flying zone 504 of the UAV 506 to the onboard computing device 218. The onboard computing device 218 transmitted the UAV flight path of the UAV 506, the UAV identifier C2560 of the UAV 506, and the active flying zone 504 of the UAV 506 to a display device 14 of the aircraft 216. The display device 14 used a symbol to display the UAV 506 and the active flying zone 504 as an overlay on the navigation display 500. The display device 14 displayed the UAV identifier C2560 in association with the UAV 506.

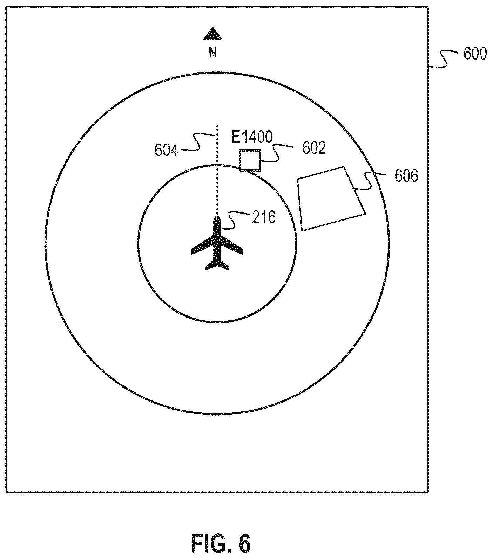

Referring to FIG. 6, an exemplary navigation display 600 including a notification that a UAV flight path of a UAV 602 has deviated from a previously transmitted UAV flight path in accordance with at least one embodiment is shown. The LAANC data management system 200 received a query for LAANC data associated with the aircraft flight path 604 from an onboard computing device 218 of the aircraft 216. The LAANC data management system 200 transmitted a notification including a UAV flight path of the UAV 602, a UAV identifier E1400 of the UAV 602, and the active flying zone 606 of the UAV 602 to the onboard computing device 218.

The LAANC data management system 200 received an updated UAV position of the UAV 602 from a UAV position detection system 226. The LAANC data management system 200 determined that the updated UAV position no longer fell within the previously transmitted active flying zone of the UAV 602. The LAANC data management system 200 transmitted the notification including an updated UAV flight path of the UAV 602 based on the updated UAV position, the UAV identifier E1400 of the UAV 602, and the active flying zone 606 of the UAV 602 to the onboard computing device 218.

The onboard computing device 218 transmitted the updated UAV flight path of the UAV 602 based on the updated UAV position, the UAV identifier E1400 of the UAV 602, and the active flying zone 606 of the UAV 602 to a display device 14 of the aircraft 216. The display device 14 used a symbol to display the UAV 602 in the updated UAV position in accordance with the updated UAV flight path and the active flying zone 606 as an overlay on the navigation display 600. The display device 14 displayed the UAV identifier E1400 in association with the UAV 602. The UAV position of the UAV 602 is shown as being outside the previously transmitted active flying zone 606 of the UAV 602.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general-purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

Techniques and technologies may be described herein in terms of functional and/or logical block components, and with reference to symbolic representations of operations, processing tasks, and functions that may be performed by various computing components or devices. Such operations, tasks, and functions are sometimes referred to as being computer-executed, computerized, software-implemented, or computer-implemented. In practice, one or more processor devices can carry out the described operations, tasks, and functions by manipulating electrical signals representing data bits at memory locations in the system memory, as well as other processing of signals. The memory locations where data bits are maintained are physical locations that have particular electrical, magnetic, optical, or organic properties corresponding to the data bits. It should be appreciated that the various block components shown in the figures may be realized by any number of hardware, software, and/or firmware components configured to perform the specified functions. For example, an embodiment of a system or a component may employ various integrated circuit components, e.g., memory elements, digital signal processing elements, logic elements, look-up tables, or the like, which may carry out a variety of functions under the control of one or more microprocessors or other control devices.

When implemented in software or firmware, various elements of the systems described herein are essentially the code segments or instructions that perform the various tasks. The program or code segments can be stored in a processor-readable medium or transmitted by a computer data signal embodied in a carrier wave over a transmission medium or communication path. The "computer-readable medium," "processor-readable medium", or "machine-readable medium" may include any medium that can store or transfer information. Examples of the processor-readable medium include an electronic circuit, a semiconductor memory device, a ROM, a flash memory, an erasable ROM (EROM), a floppy diskette, a CD-ROM, an optical disk, a hard disk, a fiber optic medium, a radio frequency (RF) link, or the like. The computer data signal may include any signal that can propagate over a transmission medium such as electronic network channels, optical fibers, air, electromagnetic paths, or RF links. The code segments may be downloaded via computer networks such as the Internet, an intranet, a LAN, or the like.

Some of the functional units described in this specification have been referred to as "modules" in order to more particularly emphasize their implementation independence. For example, functionality referred to herein as a module may be implemented wholly, or partially, as a hardware circuit comprising custom VLSI circuits or gate arrays, off-the-shelf semiconductors such as logic chips, transistors, or other discrete components. A module may also be implemented in programmable hardware devices such as field programmable gate arrays, programmable array logic, programmable logic devices, or the like. Modules may also be implemented in software for execution by various types of processors. An identified module of executable code may, for instance, comprise one or more physical or logical modules of computer instructions that may, for instance, be organized as an object, procedure, or function. Nevertheless, the executables of an identified module need not be physically located together, but may comprise disparate instructions stored in different locations that, when joined logically together, comprise the module and achieve the stated purpose for the module. Indeed, a module of executable code may be a single instruction, or many instructions, and may even be distributed over several different code segments, among different programs, and across several memory devices. Similarly, operational data may be embodied in any suitable form and organized within any suitable type of data structure. The operational data may be collected as a single data set, or may be distributed over different locations including over different storage devices, and may exist, at least partially, merely as electronic signals on a system or network.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method of managing low altitude authorization and notification capability
(LAANC) data comprising:
publishing LAANC data associated with a first plurality of unmanned aerial vehicles (UAV) in a LAANC data database, the LAANC data for each of the first plurality of UAVs comprising a UAV identifier and a UAV flight path;
receiving a query for LAANC data associated with an aircraft flight path of an aircraft from a computing system onboard the aircraft;
identifying at least one of the first plurality of UAVs having at least a portion of an associated UAV flight path within a pre-defined distance of the aircraft flight path; and
transmitting the UAV identifier and the UAV flight path associated with each of the at least one of the first plurality of UAVs to the computing system onboard the aircraft for display on a cockpit display.

2. The method of claim 1, further comprising:
receiving a plurality of requests for authorization of a plurality UAV flight paths associated with a second plurality of UAVs at the LAANC data system;
transmitting the plurality of requests for authorization of the plurality of UAV flight paths to air traffic control (ATC); and
receiving approval of the UAV flight paths associated with the first plurality of UAVs at the LAANC data system from the ATC prior to publication of the LAANC data associated with the first plurality of UAVs, the first plurality of UAVs being a subset of the second plurality of UAVs.

3. The method of claim 1, wherein the UAV flight path associated with each of the first plurality of UAVs and the aircraft flight path are within a controlled airspace of an airport.

4. The method of claim 1, wherein the aircraft flight path is an approach flight path.

5. The method of claim 1, further comprising:
determining whether the aircraft flight path falls within a pre-defined distance of a first active flying zone associated with the UAV flight path of a first UAV of the first plurality of UAVs; and
transmitting a first notification to the computing system onboard the aircraft for display on the cockpit display based on the determination, the first notification indicating that the aircraft flight path falls within the pre-defined distance of the first active flying zone.

6. The method of claim 1, further comprising:
determining whether the aircraft flight path falls within a second active flying zone associated with the UAV flight path of a second UAV of the first plurality of UAVs; and
transmitting a second notification to the computing system onboard the aircraft for display on the cockpit display based on the determination, the second notification indicating that the aircraft flight path falls within the second active flying zone.

7. The method of claim 1, further comprising:
determining whether a third UAV of the first plurality of UAVs has deviated from the UAV flight path of the third UAV; and
transmitting a third notification to the computing system onboard the aircraft for display on the cockpit display based on the determination, the third notification indicating that the third UAV has deviated from the UAV flight path of the third UAV.

8. The method of claim 1, further comprising:
determining whether the aircraft flight path intersects the UAV flight path of a fourth UAV of the first plurality of UAVs; and
transmitting a fourth notification to the computing system onboard the aircraft for display on the cockpit display based on the determination, the fourth notification being an indication of a potential event between the aircraft and the fourth UAV.

9. The method of claim 1, further comprising:
receiving a UAV position of a fifth UAV of the first plurality of UAVs from one of a UAV position detection system and ATC;
updating the UAV flight path of the fifth UAV in accordance with the UAV position to generate an updated UAV flight path of the fifth UAV; and
transmitting the updated UAV flight path of the fifth UAV to the computing system onboard the aircraft for display on the cockpit display.

10. The method of claim 1, wherein the LAANC data for each of the first plurality of UAV comprises a UAV flight time range, the query for LAANC data includes an aircraft position of the aircraft and the method further comprises:
estimating an aircraft flight time range that the aircraft will be within a controlled airspace of an airport based on the aircraft position; and
identifying the at least one of the first plurality of UAVs having at least a portion of the associated UAV flight path within the pre-defined distance of the aircraft flight path and having a UAV flight time range that overlaps the estimated aircraft flight time range.

11. The method of claim 1, further comprising:
generating an active flying zone for each of the UAV flight paths of the at least one of the first plurality of UAVs; and
transmitting the active flying zone for each of the UAV flight paths of the at least one of the first plurality of UAVs to the computing system onboard the aircraft for display on the cockpit display.

12. The method of claim 1, wherein:
the computing system onboard the aircraft comprises an (Application Programming Interface) API device including a LAANC application configured to receive the LAANC data;
the API device is communicatively coupled to a display device of the aircraft;
the display device is configured to display the cockpit display; and
the display device is configured to display the LAANC data received from the API device on the cockpit display.

13. A low altitude authorization and notification capability (LAANC) data management system comprising:
at least one processor; and
at least one memory communicatively coupled to the at least one processor, the at least one memory comprising instructions that, upon execution by the at least one processor, cause the at least one processor to:
publish LAANC data associated with a first plurality of unmanned aerial vehicles (UAV) in a LAANC data database, the LAANC data for each of the first plurality of UAVs comprising a UAV identifier and a UAV flight path;
receive a query for LAANC data associated with an aircraft flight path of an aircraft from a computing system onboard the aircraft;
identify at least one of the first plurality of UAVs having at least a portion of an associated UAV flight path within a pre-defined distance of the aircraft flight path; and
transmit the UAV identifier and the UAV flight path associated with each of the at least one of the first plurality of UAVs to the computing system onboard the aircraft for display on a cockpit display.

14. The system of claim 13, wherein the at least one memory further comprises instructions that, upon execution by the at least one processor, cause the at least one processor to:
determine whether the aircraft flight path falls within a pre-defined distance of a first active flying zone associated with the UAV flight path of a first UAV of the first plurality of UAVs; and
transmit a first notification to the computing system onboard the aircraft for display on the cockpit display based on the determination, the first notification indicating that the aircraft flight path falls within the pre-defined distance of the first active flying zone.

15. The system of claim 13, wherein the at least one memory further comprises instructions that, upon execution by the at least one processor, cause the at least one processor to:
determine whether the aircraft flight path falls within a second active flying zone associated with the UAV flight path of a second UAV of the first plurality of UAVs; and
transmit a second notification to the computing system onboard the aircraft for display on the cockpit display based on the determination, the second notification indicating that the aircraft flight path falls within the second active flying zone.
